# EUROPEAN PATENT SPECIFICATION

(11) **EP 3 344 063 B1**
(45) Date of publication and mention of the grant of the patent: **02.11.2022**
(21) Application number: 16763154.8
(22) Date of filing: 30.08.2016
(51) Int. Cl.: A23K 20/189, A23K 10/14

(54) **METHODS OF INCREASING FAT SOLUBLE VITAMIN UPTAKE IN FEED**
VERFAHREN ZUR ERHÖHUNG DER FETTLÖSLICHEN VITAMINAUFNAHME IN FUTTER
MÉTHODES D'AUGMENTATION DE L'ABSORPTION DES VITAMINES LIPOSOLUBLES DANS DES ALIMENTS POUR ANIMAUX

(30) Priority: 01.09.2015 US 201562213045 P
(43) Date of publication of application: 11.07.2018
(73) Proprietor: DuPont Nutrition Biosciences ApS, 1411 Køpenhaven K (DK)
(72) Inventor: AWATI, Ajay, Swindon Wiltshire SN1 3HW (GB); AMERAH, Ahmed, Marlborough Wiltshire SN8 2BG (GB)
(74) Representative: D Young & Co LLP
(86) International application number: PCT/US2016/049359
(87) International publication number: WO 2017/040455

(56) References cited:
- WO-A1-94/04141
- US-A- 4 391 829
- US-A1- 2004 202 697
- US-A1- 2004 253 227

## Description

### FIELD

The present disclosure relates to methods and compositions to increase the uptake of fat soluble vitamins from animal feed through increase in fat digestibility.

### BACKGROUND

Vitamins are an essential component of a healthy animal diet. Most vitamins cannot be synthesized by the animal, and thus must be taken in through the animal feed. Many animals cannot get sufficient levels of vitamins through diet alone, and thus farmers use a vitamin premix to supplement the animal diet. This can be costly and require additional ingredients, such as synthetic antioxidants (e.g. ethoxyquin or butylated hydroxytoluene (BHT)) in order to improve storage stability of the vitamins (The Vitamins, by Gerald F. Combs). Thus, there remains a need to find improved ways of getting increased vitamin uptake by animals from feed. WO 94/04141 A1 relates to a method for improving vitamin uptake in animals. The problem is solved by means of administering vitamins and mineral chelate to an animal.

### SUMMARY

The present compositions and methods relate to methods of treating an animal with one or more enzymes to increase fat soluble vitamin uptake.

In some embodiments, the invention is a method of improving animal fat soluble vitamin uptake from feed comprising administering to the animal an amylase or protease enzyme. The method can be measured by levels of the fat soluble vitamin in the liver. The fat soluble vitamin is vitamin E.

In some embodiments, the method further comprises administering a xylanase enzyme. In some embodiments, the animal is a monogastric animal such as poultry, swine, fish, shell fish, human, or a pet.

In some embodiments, the animal is a ruminant animal such as a bovine, sheep, goat, camel, deer, llama, antelope, alpaca or wildebeest.

In some embodiments, the invention is in the form of an animal feed or premix. In some embodiments, the amylase or protease is administered in an animal feed or premix. In some embodiments, the amylase or protease is administered in a granule form. In some embodiments, the amylase or protease is administered in a liquid form.

In some embodiments, the invention is a method of improving animal immune function, improving animal meat quality, improving animal gastrointestinal tract health, or decreasing animal fertility disorders comprising administering to the animal a xylanase. In some embodiments, the xylanase is administered in a dose sufficient to increase liver vitamin E level by 10%. In some embodiments, the invention is an animal feed comprising less than 500% of the recommended dose of vitamin E, and a xylanase enzyme. In some embodiments, the invention is an animal feed comprising less than 500% of the recommended dose of vitamin E, and an amylase or protease enzyme. The present invention is described in appended claims 1 to 15.

### DETAILED DESCRIPTION

Fat soluble vitamins have been shown to have beneficial effects when fed to animals. The animal feed industry utilizes vitamin supplements in order to improve animal health and quality of meat. Some of these vitamins can be found in natural sources. For example, vitamin E can be found in grass, clover, alfalfa, and other natural sources containing vegetable oils. Animals typically cannot fully digest natural feed sources, such as grains, to release the vitamins in the feed source. We have found that use of an amylase and/or a protease in animal feed supplements can increase levels of fat soluble vitamin uptake in the animal. We have further found that the combination of amylase and/or protease with xylanase in animal feed supplements produces greater levels of fat soluble vitamin uptake.

Vitamin E is a generic term describing various compounds based on tocopherol or tocotrienol. Alpha-tocophorol is the active substance in vitamin E feed supplements. Alpha-tocophorol can be obtained either from natural sources or synthesized from chemical processes. Chemically synthesized alpha-tocopherol is a racemic mixture of eight stereoisomers and differs from naturally occurring alpha-tocopherol (RRR-alpha-tocopherol). Natural alpha-tocopherol is derived from vegetable oils, and can be found in sources such as wheat germ oil, grass, clover alfalfa, uncrushed oil seeds, vegetable oils, liver, and eggs.

Vitamin E has been shown to have various biological functions, including, but not limited to biological fat soluble antioxidant, immune system stimulant, regulation of DNA synthesis, antitoxic effects (free radical quencher), tissue protection, normal development of reproductive organs, and regulation of gene expression. In animals, Vitamin E can have several effects, including, but not limited to improved immune response, stabilization of tissue and fat in animal products, and preparation for pregnancy and maintaining integrity and optimal function of the reproductive organs. Animals have been historically fed large amounts of Vitamin E for improving immune function and meat quality. In some embodiments, dosing of Vitamin E can improve animal gastrointestinal tract health. In some embodiments, dosing of Vitamin E can improve animal fat digestability.

In Vitamin E deficient animals, effects such as muscular dystrophy, fertility disorders, and reduced immune response have been seen. In ruminants, Vitamin E deficiency has been linked to stiff lamb disease, retained placenta, and increased mastitis. In pigs, Vitamin E deficiency has been linked to mulberry heart disease, mastitis, metritis and agalactia (MMA) in sows, banana disease, and yellow fat. In poultry, Vitamin E deficiency has been linked to muscular dystrophy, encephalomalacia (crazy chick disease), yellow fat, and reduced hatchability. In dogs, Vitamin E deficiency has been linked to muscle degeneration, failure of gestation, and weak or dead pups.

### I. Definitions

Prior to describing the present compositions and methods in detail, the following terms are defined for clarity. Terms and abbreviations not defined should be accorded their ordinary meaning as used in the art. Unless defined otherwise herein, all technical and scientific terms used herein have the same meaning as commonly understood by one of ordinary skill in the art. Unless otherwise indicated, the practice of the present disclosure involves conventional techniques commonly used in molecular biology, protein engineering, and microbiology. Although any methods and materials similar or equivalent to those described herein find use in the practice of the present disclosure, some suitable methods and materials are described herein. The terms defined immediately below are more fully described by reference to the Specification as a whole.

As used herein, the singular "a," "an" and "the" includes the plural unless the context clearly indicates otherwise. Unless otherwise indicated, nucleic acid sequences are written left to right in 5' to 3' orientation; and amino acid sequences are written left to right in amino to carboxy orientation. It is to be understood that this disclosure is not limited to the particular methodology, protocols, and reagents described herein, absent an indication to the contrary.

It is intended that every maximum numerical limitation given throughout this Specification includes every lower numerical limitation, as if such lower numerical limitations were expressly written herein. Every minimum numerical limitation given throughout this Specification will include every higher numerical limitation, as if such higher numerical limitations were expressly written herein. Every numerical range given throughout this Specification will include every narrower numerical range that falls within such broader numerical range, as if such narrower numerical ranges were all expressly written herein.

As used herein in connection with a numerical value, the term "about" refers to a range of +/- 0.5 of the numerical value, unless the term is otherwise specifically defined in context. For instance, the phrase a "pH value of about 6" refers to pH values of from 5.5 to 6.5, unless the pH value is specifically defined otherwise.

As used herein, the term "Vitamin A" includes the unsaturated nutritional organic compounds retinol, retinal, retinoic acid, provitamin A carotenoids, retinyl esters, and betacarotene. Vitamin A is known to have a beta-ionone ring attached to an isoprenoid chain.

As used herein, the term "Vitamin E" refers to a group of compounds based on tocopherol or tocotrienol, and includes alpha-tocopherol.

As used herein, the term "Vitamin D" refers to a group of compounds possessing antirachitic activity, and includes ergocalciferol (vitamin D₂) and cholecalciferol (vitamin D₃).

As used herein, the term "Vitamin K" includes the forms menadione sodium bisuphite and menadione nicotinamide bisulphite.

As used herein, the genus "Bacillus" includes all species within the genus "Bacillus," as known to those of skill in the art, including but not limited to *B. subtilis, B. licheniformis, B. lentus, B. brevis, B. stearothermophilus, B. alkalophilus, B. amyloliquefaciens, B. clausii, B. halodurans, B. megaterium, B. coagulans, B. circulans, B. gibsonii,* and *B. thuringiensis.* It is recognized that the genus Bacillus continues to undergo taxonomical reorganization. Thus, it is intended that the genus include species that have been reclassified, including but not limited to such organisms as *Bacillus stearothermophilus,* which is now named *"Geobacillus stearothermophilus",* or *Bacillus polymyxa,* which is now *"Paenibacillus polymyxa"* The production of resistant endospores under stressful environmental conditions is considered the defining feature of the genus Bacillus, although this characteristic also applies to the recently named *Alicyclobacillus, Amphibacillus, Aneurinibacillus, Anoxybacillus, Brevibacillus, Filobacillus, Gracilibacillus, Halobacillus, Paenibacillus, Salibacillus, Thermobacillus, Ureibacillus,* and *Virgibacillus.*

A "protein" or "polypeptide" comprises a polymeric sequence of amino acid residues. The terms "protein" and "polypeptide" are used interchangeably herein. The single and 3-letter code for amino acids as defined in conformity with the IUPAC-IUB Joint Commission on Biochemical Nomenclature (JCBN) is used throughout this disclosure. The single letter X refers to any of the twenty amino acids. It is also understood that a polypeptide may be coded for by more than one nucleotide sequence due to the degeneracy of the genetic code. Mutations can be named by the one letter code for the parent amino acid, followed by a position number and then the one letter code for the variant amino acid. For example, mutating glycine (G) at position 87 to serine (S) is represented as "G087S" or "G87S".

The term "mature" form of a protein, polypeptide, or peptide refers to the functional form of the protein, polypeptide, or peptide without the signal peptide sequence and propeptide sequence.

The term "precursor" form of a protein or peptide refers to a mature form of the protein having a prosequence operably linked to the amino or carbonyl terminus of the protein. The precursor may also have a "signal" sequence operably linked to the amino terminus of the prosequence. The precursor may also have additional polypeptides that are involved in post-translational activity (e.g., polypeptides cleaved therefrom to leave the mature form of a protein or peptide).

The term "wild-type" in reference to an amino acid sequence or nucleic acid sequence indicates that the amino acid sequence or nucleic acid sequence is a native or naturally-occurring sequence. As used herein, the term "naturally-occurring" refers to anything (e.g., proteins, amino acids, or nucleic acid sequences) that is found in nature. Conversely, the term "non-naturally occurring" refers to anything that is not found in nature (e.g., recombinant nucleic acids and protein sequences produced in the laboratory or modification of the wild-type sequence).

The terms "derived from" and "obtained from" refer to not only a protein produced or producible by a strain of the organism in question, but also a protein encoded by a DNA sequence isolated from such strain and produced in a host organism containing such DNA sequence. Additionally, the term refers to a protein which is encoded by a DNA sequence of synthetic and/or cDNA origin and which has the identifying characteristics of the protein in question. To exemplify, "proteases derived from Bacillus" refers to those enzymes having proteolytic activity that are naturally produced by Bacillus, as well as to serine proteases like those produced by Bacillus sources but which through the use of genetic engineering techniques are produced by other host cells transformed with a nucleic acid encoding the serine proteases.

The term "identical" in the context of two polynucleotide or polypeptide sequences refers to the nucleic acids or amino acids in the two sequences that are the same when aligned for maximum correspondence, as measured using sequence comparison or analysis algorithms described below and known in the art.

As used herein, "% identity" or percent identity" or "PID" refers to protein sequence identity. Percent identity may be determined using standard techniques known in the art. Useful algorithms include the BLAST algorithms (See, Altschul et al., J Mol Biol, 215:403-410, 1990; and Karlin and Altschul, Proc Natl Acad Sci USA, 90:5873-5787, 1993). The BLAST program uses several search parameters, most of which are set to the default values. The NCBI BLAST algorithm finds the most relevant sequences in terms of biological similarity but is not recommended for query sequences of less than 20 residues (Altschul et al., Nucleic Acids Res, 25:3389-3402, 1997; and Schaffer et al., Nucleic Acids Res, 29:2994-3005, 2001). Exemplary default BLAST parameters for a nucleic acid sequence searches include: Neighboring words threshold = 11; E-value cutoff = 10; Scoring Matrix = NUC.3.1 (match = 1, mismatch = -3);Gap Opening = 5; and Gap Extension = 2. Exemplary default BLAST parameters for amino acid sequence searches include: Word size = 3; E-value cutoff = 10; Scoring Matrix = BLOSUM62; Gap Opening = 11; and Gap extension = 1. A percent (%) amino acid sequence identity value is determined by the number of matching identical residues divided by the total number of residues of the "reference" sequence including any gaps created by the program for optimal/maximum alignment. BLAST algorithms refer to the "reference" sequence as the "query" sequence.

As used herein, "homologous proteins" or "homologous proteases" refers to proteins that have distinct similarity in primary, secondary, and/or tertiary structure. Protein homology can refer to the similarity in linear amino acid sequence when proteins are aligned. Homologous search of protein sequences can be done using BLASTP and PSI-BLAST from NCBI BLAST with threshold (E-value cut-off) at 0.001. (Altschul SF, Madde TL, Shaffer AA, Zhang J, Zhang Z, Miller W, Lipman DJ. Gapped BLAST and PSI BLAST a new generation of protein database search programs. Nucleic Acids Res 1997 Set 1; 25(17):3389-402). Using this information, proteins sequences can be grouped. A phylogenetic tree can be built using the amino acid sequences. Amino acid sequences can be entered in a program such as the Vector NTI Advance suite and a Guide Tree can be created using the Neighbor Joining (NJ) method (Saitou and Nei, Mol Biol Evol, 4:406-425, 1987). The tree construction can be calculated using Kimura's correction for sequence distance and ignoring positions with gaps. A program such as AlignX can display the calculated distance values in parenthesis following the molecule name displayed on the phylogenetic tree.

Understanding the homology between molecules can reveal the evolutionary history of the molecules as well as information about their function; if a newly sequenced protein is homologous to an already characterized protein, there is a strong indication of the new protein's biochemical function. The most fundamental relationship between two entities is homology; two molecules are said to be homologous if they have been derived from a common ancestor. Homologous molecules, or homologs, can be divided into two classes, paralogs and orthologs. Paralogs are homologs that are present within one species. Paralogs often differ in their detailed biochemical functions. Orthologs are homologs that are present within different species and have very similar or identical functions. A protein superfamily is the largest grouping (clade) of proteins for which common ancestry can be inferred. Usually this common ancestry is based on sequence alignment and mechanistic similarity. Superfamilies typically contain several protein families which show sequence similarity within the family. The term "protein clan" is commonly used for protease superfamilies based on the MEROPS protease classification system.

The CLUSTAL W algorithm is another example of a sequence alignment algorithm (See, Thompson et al., Nucleic Acids Res, 22:4673-4680, 1994). Default parameters for the CLUSTAL W algorithm include: Gap opening penalty = 10.0; Gap extension penalty = 0.05; Protein weight matrix = BLOSUM series; DNA weight matrix = IUB; Delay divergent sequences % = 40; Gap separation distance = 8; DNA transitions weight = 0.50; List hydrophilic residues = GPSNDQEKR; Use negative matrix = OFF; Toggle Residue specific penalties = ON; Toggle hydrophilic penalties = ON; and Toggle end gap separation penalty = OFF. In CLUSTAL algorithms, deletions occurring at either terminus are included. For example, a variant with a five amino acid deletion at either terminus (or within the polypeptide) of a polypeptide of 500 amino acids would have a percent sequence identity of 99% (495/500 identical residues × 100) relative to the "reference" polypeptide. Such a variant would be encompassed by a variant having "at least 99% sequence identity" to the polypeptide.

fA nucleic acid or polynucleotide is "isolated" when it is at least partially or completely separated from other components, including but not limited to for example, other proteins, nucleic acids, cells, etc. Similarly, a polypeptide, protein or peptide is "isolated" when it is at least partially or completely separated from other components, including but not limited to for example, other proteins, nucleic acids, cells, etc. On a molar basis, an isolated species is more abundant than are other species in a composition. For example, an isolated species may comprise at least about 60%, about 65%, about 70%, about 75%, about 80%, about 85%, about 90%, about 91%, about 92%, about 93%, about 94%, about 95%, about 96%, about 97%, about 98%, about 99%, or about 100% (on a molar basis) of all macromolecular species present. Preferably, the species of interest is purified to essential homogeneity (i.e., contaminant species cannot be detected in the composition by conventional detection methods). Purity and homogeneity can be determined using a number of techniques well known in the art, such as agarose or polyacrylamide gel electrophoresis of a nucleic acid or a protein sample, respectively, followed by visualization upon staining. If desired, a high-resolution technique, such as high performance liquid chromatography (HPLC) or a similar means can be utilized for purification of the material.

The term "purified" as applied to nucleic acids or polypeptides generally denotes a nucleic acid or polypeptide that is essentially free from other components as determined by analytical techniques well known in the art (e.g., a purified polypeptide or polynucleotide forms a discrete band in an electrophoretic gel, chromatographic eluate, and/or a media subjected to density gradient centrifugation). For example, a nucleic acid or polypeptide that gives rise to essentially one band in an electrophoretic gel is "purified." A purified nucleic acid or polypeptide is at least about 50% pure, usually at least about 60%, about 65%, about 70%, about 75%, about 80%, about 85%, about 90%, about 91%, about 92%, about 93%, about 94%, about 95%, about 96%, about 97%, about 98%, about 99%, about 99.5%, about 99.6%, about 99.7%, about 99.8% or more pure (e.g., percent by weight on a molar basis). In a related sense, a composition is enriched for a molecule when there is a substantial increase in the concentration of the molecule after application of a purification or enrichment technique. The term "enriched" refers to a compound, polypeptide, cell, nucleic acid, amino acid, or other specified material or component that is present in a composition at a relative or absolute concentration that is higher than a starting composition.

### II. Method of increasing fat-soluble vitamin uptake

In some embodiments, the invention is a method of improving animal fat soluble vitamin uptake from feed comprising administering to the animal an amylase or protease enzyme. In some embodiments, the animal fat soluble vitamin uptake is measured by levels of the fat soluble vitamin in the liver. For example, a liver vitamin E assay such as show in the Examples can be used to assess liver vitamin E content.

In some embodiments, the improved animal fat soluble vitamin uptake is an improved uptake in vitamin A, E, D, or K. In some embodiments, the improved uptake is an improved uptake in vitamin A. In some embodiments, the improved uptake is an improved uptake in vitamin E. In some embodiments, the improved uptake is an improved uptake in vitamin D. In some embodiments, the improved uptake is an improved uptake in vitamin K.

In some embodiments, the invention is a method of improving animal fat soluble vitamin uptake from feed comprising administering to the animal an amylase and protease enzyme. In some embodiments, the invention further comprises administering a xylanase enzyme.

In some embodiments, the animal is a monogastric or ruminant animal. In some embodiments, the animal is a monogastric animal. The monogastric animals include poultry (for example, broiler, layer, broiler breeders, turkey, duck, geese, water fowl), swine (all age categories), fish, shell fish including crustaceans such as shrimps, humans, and a pet (for example dogs, cats). In some embodiments, the animal is a ruminant animal. Examples of ruminant animals include bovine (for example, cow water buffalo, bison, yak), sheep, goats, camels, deer, llamas, antelope, alpacas or wildebeest.

In some embodiments, the invention is a method of improving animal immune function, animal meat quality, or animal gastrointestinal tract health, or decreasing animal fertility disorders comprising administering to the animal a xylanase. Without being bound by theory, the improved animal immune function, animal meat quality, or animal gastrointestinal tract health, or decreased animal fertility disorders are due to increased animal fat soluble vitamin uptake from feed, such as increased vitamin E uptake.

In some embodiments, the invention is a method of improving animal immune function, animal meat quality, or animal gastrointestinal tract health, or decreasing animal fertility disorders comprising administering to the animal a xylanase and further comprising administering an amylase or protease. In some embodiments, the invention is a method of improving animal immune function, animal meat quality, or animal gastrointestinal tract health, or decreasing animal fertility disorders comprising administering to the animal a xylanase and further comprising administering an amylase and protease.

In some embodiments, the invention further comprises administering one or more additional enzymes. In some embodiments, the one or more additional enzymes is selected from the group consisting of those involved in protein degradation including carboxypeptidases preferably carboxypeptidase A, carboxypeptidase Y, A. niger aspartic acid proteases of PEPAa, PEPAb, PEPAc and PEPAd, elastase, amino peptidases, pepsin or pepsin-like, trypsin or trypsin -like proteases, acid fungal proteases and bacterial proteases including subtilisin and its variants, and of those involved in starch metabolism, fibre degradation, lipid metabolism, proteins or enzymes involved in glycogen metabolism, enzymes which degrade other contaminants, acetyl esterases, amylases, arabinases, arabinofuranosidases, exo- and endo-peptidases, catalases, cellulases, chitinases, chymosin, cutinase, deoxyribonucleases, epimerases, esterases, formamidase, -galactosidases, for example α or β-galactosidases, exo-glucanases, glucan lysases, endo-giucanases, glucoamylases, glucose oxidases, glucosidases, for example α or β-glucosidases, glucuronidases, hemicelluiases, hydrolases, invertases, isomerases, laccases, phenol oxidases, lipase, lyases, mannosidases, oxidases, oxidoreductases, pectinase, pectate lyases, pectin acetyl esterases, pectin depolymerases, peptidase, pectin methyl esterases, pectinolytic enzymes, peroxidases, phenoloxidases, phytase, polygalacturonases, rhamno-galacturonases, ribonucleases, thaumatin, transferases, transport proteins, transglutaminases, xylanases, hexose oxidase (D-hexose: (3/4- oxidoreductase, EC 1.1.3.5), acid phosphatases and/or others or combinations thereof. These include enzymes that, for example, modulate the viscosity of the composition or feed.

In some embodiments, the invention is a method of improving animal immune function, animal meat quality, or animal gastrointestinal tract health, or decreasing animal fertility disorders comprising administering to the animal a xylanase, wherein the xylanase is administered in a dose sufficient to increase liver vitamin E level by 5%, 10%, 15%, 20%, 25%, 30%, 35%, 40%, 45%, 50%, 55%, 60%, 65%, 70%, 75%, 80%, 85%, 90%, 95%, 100% or more. The level of increased liver vitamin E can be measured, for example, by a liver vitamin E assay, such as that shown in the Examples.

In some embodiments, the invention is a method of improving animal immune function, animal meat quality, or animal gastrointestinal tract health, or decreasing animal fertility disorders comprising administering to the animal a xylanase, and in addition administering an amylase or protease, wherein the xylanase and amylase or protease is administered in a dose sufficient to increase liver vitamin E level by 5%, 10%, 15%, 20%, 25%, 30%, 35%, 40%, 45%, 50%, 55%, 60%, 65%, 70%, 75%, 80%, 85%, 90%, 95%, 100% or more. In some embodiments, the method comprises administering the xylanase and both an amylase and protease.

In some embodiments, the invention is a method of improving animal immune function, animal meat quality, or animal gastrointestinal tract health, or decreasing animal fertility disorders comprising administering to the animal an amylase or protease, wherein the amylase or protease is administered in a dose sufficient to increase liver vitamin E level by 5%, 10%, 15%,20%,25%,30%,35%,40%,45%,50%,55%,60%,65%,70%,75%,80%,85%, 90%, 95%, 100% or more. In some embodiments, the method comprises administering an amylase and a protease.

In some embodiments, the invention is the method of improving animal immune function, animal meat quality, or animal gastrointestinal tract health, or decreasing animal fertility disorders as stated in any of the embodiments above, further comprising administering one or more additional enzymes. In some embodiments, the one or more additional enzymes is selected from the group consisting of those involved in protein degradation including carboxypeptidases preferably carboxypeptidase A, carboxypeptidase Y, A. niger aspartic acid proteases of PEPAa, PEPAb, PEPAc and PEPAd, elastase, amino peptidases, pepsin or pepsin-like, trypsin or trypsin -like proteases, acid fungal proteases and bacterial proteases including subtilisin and its variants, and of those involved in starch metabolism, fibre degradation, lipid metabolism, proteins or enzymes involved in glycogen metabolism, enzymes which degrade other contaminants, acetyl esterases, amylases, arabinases, arabinofuranosidases, exo- and endo-peptidases, catalases, cellulases, chitinases, chymosin, cutinase, deoxyribonucleases, epimerases, esterases, formamidase, -galactosidases, for example α or β-galactosidases, exo-glucanases, glucan lysases, endo-giucanases, glucoamylases, glucose oxidases, glucosidases, for example α or β-glucosidases, glucuronidases, hemicelluiases, hydrolases, invertases, isomerases, laccases, phenol oxidases, lipase, lyases, mannosidases, oxidases, oxidoreductases, pectinase, pectate lyases, pectin acetyl esterases, pectin depolymerases, peptidase, pectin methyl esterases, pectinolytic enzymes, peroxidases, phenoloxidases, phytase, polygalacturonases, rhamno-galacturonases, ribonucleases, thaumatin, transferases, transport proteins, transglutaminases, xylanases, hexose oxidase (D-hexose: (3/4- oxidoreductase, EC 1.1.3.5), acid phosphatases and/or others or combinations thereof. These include enzymes that, for example, modulate the viscosity of the composition or feed.

### III. Enzymes for increasing fat-soluble vitamin uptake

### Amylase

Amylase is the name given to a class of enzymes capable of hydrolysing starch to shorter-chain oligosaccharides such as maltose. The glucose moiety can then be more easily transferred from maltose to a monoglyceride or glycosylmonoglyceride than from the original starch molecule. The term amylase includes α-amylases (E.C. 3.2.1.1), G4-forming amylases (E.C. 3.2.1.60), β-amylases (E.C. 3.2.1.2) and γ-amylases (E.C. 3.2.1.3). In one embodiment preferably the amylase is an α-amylase. α-Amylases are classified as (E.C. 3.2.1.1). These can include amylases of bacterial or fungal origin, chemically modified or protein engineered mutants are included. In one embodiment preferably the amylase may be an amylase, e.g. an α-amylase, from *Bacillus licheniformis* and/or an amylase, e.g. an α-amylase, from *Bacillus amyloliquefaciens.* In one embodiment the α-amylase may be the α-amylase in Axtra XAP^{®} or Avizyme 1502^{®}, both commercially available products from Danisco A/S. In another embodiment the amylase may be a pepsin resistant α-amylase, such as a pepsin resistant *Trichoderma* (such as *Trichoderma reesei*) alpha amylase. A suitably pepsin resistant α-amylase is taught in UK application number 1011513.7 (which is incorporated herein by reference) and PCT/IB2011/053018 (which is incorporated herein by reference).

In one preferred embodiment the amylase for use in the present invention may be one or more of the amylases in one or more of the commercial products below:

| **Commercial product^{®}** | **Company** | **Amylase type** | **Amylase source** |
|---|---|---|---|
| Amylofeed | Andrés Pintaluba S.A | alpha amylase | *Aspergillus oryzae* |
| Avizyme 1500 | Danisco | alpha amylase | *Bacillus amyloliquefaciens* |
| Avizyme 1505 | Danisco | alpha amylase | *Bacillus amyloliquefaciens* |
| Kemzyme Plus Dry | Kemin | alpha-amylase | *Bacillus amyloliquefaciens* |
| Kemzyme Plus Liquid | Kemin | alpha-amylase | *Bacillus amyloliquefaciens* |
| Kemzyme W dry | Kemin | alpha-amylase | *Bacillus amyloliquefaciens* |
| Kemzyme W liquid | Kemin | alpha-amylase | *Bacillus amyloliquefaciens* |
| Natuzyme | Bioproton | alpha-amylase | *Trichoderma longibrachiatum* /*Trichoderma reesei* |
| Porzyme 8100 | Danisco | alpha-amylase | *Bacillus amyloliquefaciens* |
| Porzyme tp100 | Danisco | alpha-amylase | *Bacillus amyloliquefaciens* |
| Ronozyme A | DSM/Novozymes | alpha-amylase | *Bacillus amyloliquefaciens* |
| Ronozyme AX | DSM | alpha-amylase | *Bacillus amyloliquefaciens* |
| Ronozyme^{®} RumiStar (L/CT) | DSM/Novozymes | alpha-amylase | *Bacillus stearothermophilus* expressed in *Bacillus licheniformis* |

In one embodiment the amylase may be a maltogenic alpha-amylase from *Bacillus* (see EP 120 693). This amylase is commercially available under the trade name Novamyl^{™} ( Novo Nordisk A/S, Denmark). Novamyl is described in detail in International Patent Publication WO 91/104669. Preferably, the amylase is present in the feedstuff in range of about 50AU/kg to about 10,000AU/kg feed, more preferably about 70AU/kg feed to about 7500AU/kg feed, more preferably about 70AU/kg feed to about 5000AU/kg feed and even more preferably about 100AU/kg feed to about 2000AU/kg feed. In one embodiment the amylase is present in the feedstuff at more than about 50AU/kg feed, suitably more than about 60AU/kg feed, suitably more than about 70AU/kg feed, suitably more than about 80AU/kg feed, suitably more than about 90AU/kg feed, suitably more than about 100AU/kg feed. In one embodiment the amylase is present in the feedstuff at less than about 10,000AU/kg feed, suitably less than about 8000AU/kg feed, suitably less than about 7000AU/kg feed, suitably less than about 5000AU/kg feed, suitably less than about 4000AU/kg feed, suitably less than about 3000AU/kg feed, suitably less than about 2000AU/kg feed. Preferably, the amylase is present in the feed additive composition in range of about 10AU/kg to about 200,000AU/g composition, more preferably about 30AU/g composition to about 100,000AU/g composition, and even more preferably about 40AU/g composition to about 50,000 AU/g composition, and even more preferably about 50AU/g composition to about 20,000 AU/g composition. In one embodiment the amylase is present in the feed additive composition at more than about 10AU/g composition, suitably more than about 20AU/g composition, suitably more than about 30AU/g composition, suitably more than about 40AU/g composition, suitably more than about 50AU/g composition. In one embodiment the amylase is present in the feed additive composition at less than about 200,000AU/g composition, suitably less than about 100,000AU/g composition, suitably less than about 50,000AU/g composition, suitably less than about 40,000AU/g composition, suitably less than about 30000AU/g composition, suitably less than about 20000AU/g composition.

It will be understood that one amylase unit (AU) is the amount of enzyme that releases 1 mmol of glucosidic linkages from a water insoluble cross-linked starch polymer substrate per min at pH 6.5 and 37°C (this may be referred to herein as the assay for determining 1 AU). 1 TAU (a-amylase activity) is the amount of enzyme required to release (in the presence of excess α-glucosidase) 0.20 µmol of glucosidic linkages (expressed as *p*-nitrophenol equivalents) from a maltoheptaoside substrate per minute at pH 8.0 and 40 °C . This may be referred to herein as the assay for determining 1 TAU unit. In one embodiment suitably the enzyme is classified using the E.C. classification above, and the E.C. classification designates an enzyme having that activity when tested in the assay taught herein for determining 1 AU.

### Protease

The term protease as used herein is synonymous with peptidase or proteinase. The protease for use in the present invention may be a subtilisin (E.C. 3.4.21.62) or a bacillolysin (E.C. 3.4.24.28) or an alkaline serine protease (E.C. 3.4.21.x) or a keratinase (E.C. 3.4.x.x), or an acid fungal protease, aspartic protease, or trypsin protease. In some embodiments, the protease in accordance with the present invention is a subtilisin. Suitable proteases include those of animal, vegetable or microbial origin. Chemically modified or protein engineered mutants are also suitable. The protease may be a serine protease or a metalloprotease, e.g., an alkaline microbial protease or a trypsin-like protease. Examples of alkaline proteases are subtilisins, especially those derived from *Bacillus* sp., e.g., subtilisin Novo, subtilisin Carlsberg, subtilisin 309 (*see, e.g.*, U.S. Patent No. 6,287,841), subtilisin 147, and subtilisin 168 (*see, e.g.*, WO 89/06279). Examples of trypsin-like proteases are trypsin (e.g., of porcine or bovine origin), and *Fusarium* proteases (*see, e.g.*, WO 89/06270 and WO 94/25583). Examples of useful proteases also include but are not limited to the variants described in WO 92/19729 and WO 98/20115.

In one preferred embodiment the protease for use in the present invention may be one or more of the proteases in one or more of the commercial products below:

| **Commercial product^{®}** | **Company** | **Protease type** | **Protease source** |
|---|---|---|---|
| Avizyme 1100 | Danisco A/S | Subtilisin | *Bacillus subtilis* |
| Avizyme 1202 | Danisco A/S | Subtilisin | *Bacillus subtilis* |
| Avizyme 1302 | Danisco A/S | Subtilisin | *Bacillus subtilis* |
| Avizyme 1500 | Danisco A/S | Subtilisin | *Bacillus subtilis* |
| Avizyme 1505 | Danisco A/S | Subtilisin | *Bacillus subtilis* |
| Kemzyme Plus Dry | Kemin | Bacillolysin | *Bacillus amyloliquefaciens* |
| Kemzyme W dry | Kemin | Bacillolysin | *Bacillus amyloliquefaciens* |
| Natuzyme | Bioproton | Protease | *Trichoderma longibrachiatum* /*Trichoderma reesei* |
| Porzyme 8300 | Danisco | Subtilisin | *Bacillus subtilis* |
| Ronozyme ProAct | DSM/Novozymes | Alkaline serine protease | *Nocardiopsis prasina gene* expressed in *Bacillus licheniformis* |
| Versazyme/Cibenza DP100 | Novus | Keratinase | *Bacillus licheniformis* |

In one embodiment the protease may be a protease from *B. subtilis.* In one embodiment the protease may be a *Nocardiopsis* protease available from Novozymes A/S. Preferably, the protease is present in the feedstuff in range of about 1000U/kg to about 20,000PU/kg feed, more preferably about 1500PU/kg feed to about 10000PU/kg feed, more preferably about 2000PU/kg feed to about 6000PU/kg feed. In one embodiment the protease is present in the feedstuff at more than about 1000PU/kg feed, suitably more than about 1500PU/kg feed, suitably more than about 2000PU/kg feed. In one embodiment the protease is present in the feedstuff at less than about 20,000PU/kg feed, suitably less than about 10000PU/kg feed, suitably less than about 7000PU/kg feed, suitably less than about 6000PU/kg feed. Preferably, the protease is present in the feed additive composition in range of about 200PU/g to about 400,000PU/g composition, more preferably about 300PU/g composition to about 200,000PU/g composition, and even more preferably about 5000PU/g composition to about 100,000 PU/g composition, and even more preferably about 700PU/g composition to about 70,000 PU/g composition, and even more preferably about 1000PU/g composition to about 60,000 PU/g composition. In one embodiment the protease is present in the feed additive composition at more than about 200PU/g composition, suitably more than about 300PU/g composition, suitably more than about 400PU/g composition, suitably more than about 500PU/g composition, suitably more than about 750PU/g composition, suitably more than about 1000PU/g composition. In one embodiment the protease is present in the feed additive composition at less than about 400,000PU/g composition, suitably less than about 200,000PU/g composition, suitably less than about 100,000PU/g composition, suitably less than about 80,000PU/g composition, suitably less than about 70000PU/g composition, suitably less than about 60000PU/g composition.

It will be understood that one protease unit (PU) is the amount of enzyme that liberates from the substrate (0.6% casein solution) one microgram of phenolic compound (expressed as tyrosine equivalents) in one minute at pH 7.5 (40mM Na₂PO₄ / lactic acid buffer) and 40°C. This may be referred to as the assay for determining 1PU. In one embodiment suitably the enzyme is classified using the E.C. classification above, and the E.C. classification designates an enzyme having that activity when tested in the assay taught herein for determining 1PU.

### Xylanase

Xylanase is the name given to a class of enzymes which degrade the linear polysaccharide beta-1,4-xylan into xylose, thus breaking down hemicellulose, one of the major components of plant cell walls. The xylanase for use in the present invention may be any commercially available xylanase. Suitably the xylanase may be an endo-1,4-β-d-xylanase (classified as E.C. 3.2.1.8) or a 1,4 β-xylosidase (classified as E.C. 3.2.1.37). In one embodiment preferably the xylanase in an endoxylanase, e.g. an endo-1,4-β-d-xylanase. The classification for an endo-1,4-β-d-xylanase is E.C. 3.2.1.8. All E.C. enzyme classifications referred to here relate to the classifications provided in Enzyme Nomenclature - Recommendations (1992) of the nomenclature committee of the International Union of Biochemistry and Molecular Biology - ISBN 0-12-226164-3. Suitably, the xylanase for use in the present invention may be a xylanase from *Bacillus, Trichoderma, Thermomyces, Aspergillus* and *Penicillium.* In one embodiment the xylanase may be the xylanase in Axtra XAP^{®} or Avizyme 1502^{®}, both commercially available products from Danisco A/S. In one preferred embodiment the xylanase for use in the present invention may be one or more of the xylanases in one or more of the commercial products below:

| **Commercial Name ^{®}** | **Company** | **Xylanase type** | **Xylanase source** |
|---|---|---|---|
| Allzyme PT | Alltech | endo-1,4-β-xylanase | Aspergillus Niger |
| Amylofeed | Andrés Pintaluba S.A | endo-1,4-β-xylanase | Aspergillus Niger (phoenicis) |
| Avemix 02 CS | Aveve | endo-1,4-β-xylanase | Trichoderma reesei |
| AveMix XG 10 | Aveve, NL | endo-1,4-β-xylanase | Trichoderma reesei |
| Avizyme 1100 | Danisco | endo-1,4-β-xylanase | Trichoderma longibrachiatum |
| Avizyme 1110 | Danisco | endo-1,4-β-xylanase | Trichoderma longibrachiatum |
| Avizyme 1202 | Danisco | endo-1,4-β-xylanase | Trichoderma longibrachiatum |
| Avizyme 1210 | Danisco | endo-1,4-β-xylanase | Trichoderma longibrachiatum |
| Avizyme 1302 | Danisco | endo-1,4-β-xylanase | Trichoderma longibrachiatum |
| Avizyme 1500 | Danisco | endo-1,4-β-xylanase | Trichoderma longibrachiatum |
| Avizyme 1505 | Danisco | endo-1,4-β-xylanase | Trichoderma longibrachiatum |
| Avizyme SX | Danisco | endo-1,4-β-xylanase | Trichoderma longibrachiatum |
| Belfeed MP100 | Beldem | endo-1,4-β-xylanase | Bacillus subtilis |
| Biofeed Plus | DSM | endo-1,4-β-xylanase | Humicola insolens |
| Danisco Glycosidase (TPT/L) | Danisco Animal Nutrition | endo-1,4-β-xylanase | Trichoderma reesei |
| Danisco Xylanase | Danisco | endo-1,4-β-xylanase | Trichoderma reesei |
| Econase XT | AB Vista | endo-1,4-β-xylanase | Trichoderma reesei |
| Endofeed^{®} DC | Andres Pintaluba S.A. | endo-1,4-β-xylanase | Aspergillus Niger |
| Feedlyve AXL | Lyven | endo-1,4-β-xylanase | Trichoderma longibrachiatum |
| Grindazym GP | Danisco | endo-1,4-β-xylanase | Aspergillus Niger |
| Grindazym GV | Danisco | endo-1,4-β-xylanase | Aspergillus Niger |
| Hostazym X | Huvepharma | endo-1,4-β-xylanase | Trichoderma longibrachiatum |
| Kemzyme Plus Dry | Kemin | endo-1,4-β-xylanase | Trichoderma viride |
| Kemzyme Plus | Kemin | endo-1,4-β-xylanase | Trichoderma viride |

| **Commercial Name ^{®}** | **Company** | **Xylanase type** | **Xylanase source** |
|---|---|---|---|
| Liquid | | | |
| Kemzyme W dry | Kemin | endo-1,4-β-xylanase | Trichoderma viride |
| Kemzyme W liquid | Kemin | endo-1,4-β-xylanase | Trichoderma viride |
| Natugrain | BASF | endo-1,4-β-xylanase | Trichoderma longibrachiatum |
| Natugrain TS Plus | BASF | endo-1,4-β-xylanase | Aspergillus Niger |
| Natugrain Wheat | BASF | endo-1,4-β-xylanase | Aspergillus Niger |
| Natugrain^{®} TS/L | BASF | endo-1,4-β-xylanase | Aspergillus Niger |
| Natuzyme | Bioproton | endo-1,4-β-xylanase | Trichoderma longibrachiatum /Trichoderma reesei |
| Porzyme 8100 | Danisco | endo-1,4-β-xylanase | Trichoderma longibrachiatum |
| Porzyme 8300 | Danisco | endo-1,4-β-xylanase | Trichoderma longibrachiatum |
| Porzyme 9102 | Danisco | endo-1,4-β-xylanase | Trichoderma longibrachiatum |
| Porzyme 93 1 0/Avizyme 1310 | Danisco | endo-1,4-β-xylanase | Trichoderma longibrachiatum |
| Porzyme tp100 | Danisco | endo-1,4-β-xylanase | Trichoderma longibrachiatum |
| Ronozyme AX | DSM | endo-1,4-β-xylanase | Thermomyces lanuginosus gene expressed in Aspergillus *oryzae* |
| Ronozyme WX | DSM/Novozymes | endo-1,4-β-xylanase | Thermomyces lanuginosus gene expressed in Aspergillus *oryzae* |
| Rovabio Excel | Adisseo | endo-1,4-β-xylanase | Penicillium funiculosum |
| Roxazyme G2 | DSM/Novozymes | endo-1,4-β-xylanase | Trichoderma longibrachiatum |
| Safizym X | Le Saffre | endo-1,4-β-xylanase | Trichoderma longibrachiatum |
| Xylanase | Lyven | endo-1,4-β-xylanase | Trichoderma longibrachiatum |

Preferably, the xylanase is present in the feedstuff in range of about 500XU/kg to about 16,000XU/kg feed, more preferably about 750XU/kg feed to about 8000XU/kg feed, and even more preferably about 1000XU/kg feed to about 4000XU/kg feed. In one embodiment the xylanase is present in the feedstuff at more than about 500XU/kg feed, suitably more than about 600XU/kg feed, suitably more than about 700XU/kg feed, suitably more than about 800XU/kg feed, suitably more than about 900XU/kg feed, suitably more than about 1000XU/kg feed. In one embodiment the xylanase is present in the feedstuff at less than about 16,000XU/kg feed, suitably less than about 8000XU/kg feed, suitably less than about 7000XU/kg feed, suitably less than about 6000XU/kg feed, suitably less than about 5000XU/kg feed, suitably less than about 4000XU/kg feed. Preferably, the xylanase is present in the feed additive composition in range of about 100XU/g to about 320,000XU/g composition, more preferably about 300XU/g composition to about 160,000XU/g composition, and even more preferably about 500XU/g composition to about 50,000 XU/g composition, and even more preferably about 500XU/g composition to about 40,000 XU/g composition. In one embodiment the xylanase is present in the feed additive composition at more than about 100XU/g composition, suitably more than about 200XU/g composition, suitably more than about 300XU/g composition, suitably more than about 400XU/g composition, suitably more than about 500XU/g composition. In one embodiment the xylanase is present in the feed additive composition at less than about 320,000XU/g composition, suitably less than about 160,000XU/g composition, suitably less than about 50,000XU/g composition, suitably less than about 40,000XU/g composition, suitably less than about 30000XU/g composition.

It will be understood that one xylanase unit (XU) is the amount of enzyme that releases 0.5 µmol of reducing sugar equivalents (as xylose by the Dinitrosalicylic acid (DNS) assay - reducing sugar method) from a oat-spelt-xylan substrate per min at pH 5.3 and 50°C. (Bailey, M.J. Biely, P. and Poutanen, K., Journal of Biotechnology, Volume 23, (3), May 1992, 257-270). In one embodiment suitably the enzyme is classified using the E.C. classification above, and the E.C. classification designates an enzyme having that activity when tested in the assay taught herein for determining 1 XU

### VI. Feed or Feedstuff

It will be understood that the feed additive may be for any suitable animal. In one preferred embodiment the animal is a monogastric animal, for example, poultry, swine, fish, shellfish and Crustacea, for example, shrimps, humans, pet animals such as, for example, cats or dogs. In an alternative preferred example the animal is a ruminant selected from, for example, cows or other bovines, sheep, goats, camels, deer, llama, antelope, alpacas or wildebeest.

In some embodiments, the enzymes of the present invention may be formulated as a liquid, a dry powder or a granule. The dry powder or granules may be prepared by means known to those skilled in the art, such as, in top-spray fluid bed coater, in a buttom spray Wurster or by drum granulation (e.g. High sheer granulation), extrusion, pan coating or in a microingredients mixer.

It will be obvious to the skilled person that the food or feed additive according to the present invention may also comprise other components such as stabilizing agents and/or bulking agents and/or other enzymes. Preferably, the food or feed additive according to the present invention will be thermally stable to heat treatment up to about 70°C; up to about 80°C; or up to about 95°C. The heat treatment may be performed for up to about 0.5 minute; up to about 5 minutes; up to about 10 minutes; up to about 30 minutes; up to about 60 minutes. The term thermally stable means that at least about 75% of the enzyme components that were present/active in the additive before heating to the specified temperature are still present/active after it cools to room temperature. Preferably, at least about 80% of the enzyme components that were present and active in the additive before heating to the specified temperature are still present and active after it cools to room temperature.

In some embodiments the food or feed additive is homogenized to produce a powder in an alternative preferred embodiment, the food or feed additive is formulated in to granules as described in WO2007/044968 (referred to as TPT granules) incorporated herein by reference.

In one embodiment the feed additive composition may be formulated to a granule for feed compositions comprising: a core; an active agent, and at least one coating, the active agent of the granule retaining at least 50% activity, at least 60% activity, at least 70% activity, at least 80% activity after conditions selected from one or more of a) a feed pelleting process, b) a steam-heated feed pretreatment process, c) storage, d) storage as an ingredient in an unpelleted mixture, and e) storage as an ingredient in a feed base mix or a feed premix comprising at least one compound selected from trace minerals, organic acids, reducing sugars, vitamins, choline chloride, and compounds which result in an acidic or a basic feed base mix or feed premix.

In another embodiment when the food or feed additive is formulated into granules the granules comprises a hydrated barrier salt coated over the protein core. The advantage of such salt coating is improved thermo-tolerance, improved storage stability and protection against other food or feed additives otherwise having adverse effect on the enzyme.

Preferably, the salt used for the salt coating has a water activity less than 0.25 or constant humidity greater than 60% at 20°C. Preferably, the salt coating comprises a Na₂S0₄.

The method of preparing a food or feed additive may also comprise the further step of pelleting the powder. The powder may be mixed with other components known in the art. The powder, or mixture comprising the powder, may be forced through a die and the resulting strands are cut into suitable pellets of variable length.

Optionally, the pelleting step may include a steam treatment, or conditioning stage, prior to formation of the pellets. The mixture comprising the powder may be placed in a conditioner, e.g. a mixer with steam injection. The mixture is heated in the conditioner up to a specified temperature, such as from 60-100°C, typical temperatures would be 70°C, 85°C, 90°C or 95°C. The residence time can be variable from seconds to minutes and even hours. Such as 5 seconds, 10 seconds, 15 seconds, 30 seconds, 1 minutes 2 minutes., 5 minutes, 10 minutes, 15 minutes, 30 minutes and 1 hour. In a further aspect there is provided a food or feed material comprising the food or feed additive of the present invention. It will be understood that the food or feed additive of the present invention is suitable for addition to any appropriate food or feed material. It will be obvious to the skilled person that the food or feed additive can be added to any food or feed material as a precautionary step. As used herein, the term feed material refers to the basic feed material to be consumed by an animal. It will be further understood that this may comprise, for example, at least one or more unprocessed grains, and/or processed plant and/or animal material such as soybean meal or bone meal. In some embodiments, the feed material will comprise one or more of the following components: a) cereals, such as small grains (e.g., wheat, barley, rye, oats and combinations thereof) and/or large grains such as maize or sorghum; b) by products from cereals, such as corn gluten meal, Distillers Dried Grain Solubles (DDGS), wheat bran, wheat middlings, wheat shorts, rice bran, rice hulls, oat hulls, palm kernel, and citrus pulp; c) silage such as maize silage; d) protein obtained from sources such as soya, sunflower, peanut, lupin, peas, fava beans, cotton, canola, fish meal, dried plasma protein, meat and bone meal, potato protein, whey, copra, sesame; e) oils and fats obtained from vegetable and animal sources; f) minerals and vitamins.

In one embodiment, the composition is in a liquid formulation suitable for consumption preferably such liquid consumption contains one or more of the following: a buffer, salt, sorbitol and/or glycerol.

In another embodiment the feed additive composition may be formulated by applying, e.g. spraying, the enzyme(s) onto a carrier substrate, such as ground wheat for example.

In one embodiment the feed additive composition according to the present invention may be formulated as a premix. By way of example only the premix may comprise one or more feed components, such as one or more minerals and/or one or more vitamins.

In one embodiment the enzymes for use in the present invention are formulated with at least one physiologically acceptable carrier selected from at least one of maltodextrin, limestone (calcium carbonate), cyclodextrin, wheat or a wheat component, sucrose, starch, Na₂SO₄, Talc, PVA, sorbitol, benzoate, sorbiate, glycerol, sucrose, propylene glycol, 1,3-propane diol, glucose, parabens, sodium chloride, citrate, acetate, phosphate, calcium, metabisulfite, formate and mixtures thereof.

As used herein, the term feedstuff refers to a feed material to which one or more feed additives have been added. According to another aspect there is provided a feedstuff comprising the feed material of the present invention. It will be understood by the skilled person that different animals require different feedstuffs, and even the same animal may require different feedstuffs, depending upon the purpose for which the animal is reared.

In some embodiments, the feedstuff may comprise feed materials comprising maize or corn, wheat, barley, triticale, rye, rice, tapioca, sorghum, grass, clover, alfalfa, and/ or any of the by-products, as well as protein rich components like soybean mean, rape seed meal, canola meal, cotton seed meal, sunflower seed mean, animal-by-product meals and mixtures thereof. In some embodiments, the feedstuff may comprise animal fats and / or vegetable oils. Optionally, the feedstuff may also contain additional minerals such as, for example, calcium and/or additional vitamins.

In another aspect there is provided a method for producing a feedstuff. Feedstuff is typically produced in feed mills in which raw materials are first ground to a suitable particle size and then mixed with appropriate additives. The feedstuff may then be produced as a mash or pellets; the later typically involves a method by which the temperature is raised to a target level and then the feed is passed through a die to produce pellets of a particular size. The pellets are allowed to cool. Subsequently liquid additives such as fat and enzyme may be added. Production of feedstuff may also involve an additional step that includes extrusion or expansion prior to pelleting - in particular by suitable techniques that may include at least the use of steam.

The feedstuff may be a feedstuff for any suitable animal. In some embodiments, the feedstuff is for domestic or farm animals. In one embodiment the animal is a monogastric animal, such as poultry (for example, broiler, layer, broiler breeders, turkey, duck, geese, water fowl), swine (all age categories), fish, shell fish including crustaceans such as shrimps, humans, a pet (for example dogs, cats). In some embodiments the animal is a ruminant, such as a bovine (for example, cow water buffalo, bison, yak), sheep, goats, camels, deer, llamas, antelope, alpacas or wildebeest.

The feedstuff may comprise at least 0.0001 % by weight of the feed additive. Suitably, the feedstuff may comprise at least 0.0005%; at least 0.0010%; at least 0.0020%; at least 0.0025%; at least 0.0050%; at least 0.0100%; at least 0.020%; at least 0.100% at least 0.200%; at least 0.250%; at least 0.500% by weight of the feed additive.

The feed additive composition of the present invention may be used as - or in the preparation of - a feed. The term "feed" is used synonymously herein with "feedstuff". The feed may be in the form of a solution or as a solid - depending on the use and/or the mode of application and/or the mode of administration. When used as - or in the preparation of - a feed - such as functional feed - the composition of the present invention may be used in conjunction with one or more of: a nutritionally acceptable carrier, a nutritionally acceptable diluent, a nutritionally acceptable excipient, a nutritionally acceptable adjuvant, a nutritionally active ingredient. In a preferred embodiment the feed additive composition of the present invention is admixed with a feed component to form a feedstuff. The term "feed component" as used herein means all or part of the feedstuff. Part of the feedstuff may mean one constituent of the feedstuff or more than one constituent of the feedstuff, e.g. 2 or 3 or 4. In one embodiment the term "feed component" encompasses a premix or premix constituents. Preferably the feed may be a fodder, or a premix thereof, a compound feed, or a premix thereof. In one embodiment the feed additive composition according to the present invention may be admixed with a compound feed, a compound feed component or to a premix of a compound feed or to a fodder, a fodder component, or a premix of a fodder. The term fodder as used herein means any food which is provided to an animal (rather than the animal having to forage for it themselves). Fodder encompasses plants that have been cut. The term fodder includes hay, straw, silage, compressed and pelleted feeds, oils and mixed rations, and also sprouted grains and legumes. Fodder may be obtained from one or more of the plants selected from: alfalfa (lucerne), barley, birdsfoot trefoil, brassicas, Chau moellier, kale, rapeseed (canola), rutabaga (swede), turnip, clover, alsike clover, red clover, subterranean clover, white clover, grass, false oat grass, fescue, Bermuda grass, brome, heath grass, meadow grasses (from naturally mixed grassland swards, orchard grass, rye grass, Timothy-grass, corn (maize), millet, oats, sorghum, soybeans, trees (pollard tree shoots for tree-hay), wheat, and legumes.

Guidelines have been provided for minimum requirements of fat soluble vitamins for the animal (see Blum et al. (2014) Vitamins in Animal Nutrition; ISBN 978-2-9601289-2-5). For example, for vitamin E, the guidelines for various animals is as follows for poultry: 40-60 mg/Kg for starter Broilers; 20-30 mg/Kg for grower-finisher Broilers; 30-50 mg/Kg for Broiler Breeders; 20-30 mg/Kg for laying hens; 40-60 mg/Kg for starter turkeys; 30-50 mg/Kg for grower turkeys; 30-40 mg/Kg for finisher turkeys; 40-60 mg/Kg for turkey breeders; 40-60 mg/Kg for ducks/geese, partridges/quails. For swine: 80-150 mg/Kg for pre-starter piglets; 70-100 mg/Kg for starter piglets; 60-80 mg/Kg for grower pigs; 40-60 mg/Kg for finisher pigs; 60-80 mg/Kg for sows. For ruminants and horses: 200-400 mg/head/d for dairy cows; 80-120 mg/head/d for milk-replacer calves; 100-150 mg/head/d for heifers; 200-300 mg/head/d for fattening cattle; 2000-3000 mg/head/d for cows; 50-80 mg/head/d for sheep and goats; 1000-1200 mg/head/d for foals; 600-800 mg/head/d for leisure horses; 1200-1500 mg/head/d for race and breeding horses. In addition, the guidelines suggest 100-250 mg/Kg for dogs; 150-300 mg/Kg for cats; 40-60 mg/Kg for rabbits; and 100-400 mg/Kg for fish.

In some embodiments, the invention is an animal feed or feedstuff comprising less than 500%, 400%, 300%, 200%, 100%, 90%, 80%, 70%, 60%, 50%, 40%, 30%, 20%, or 10% of the of the recommended supplemental dose of vitamin E, and an effective dose of xylanase. In some embodiments, the effective dose of xylanase is effective to increase liver vitamin E level by 5%, 10%, 15%, 20%, 25%, 30%, 35%, 40%, 45%, 50%, 55%, 60%, 65%, 70%, 75%, 80%, 85%, 90%, 95%, 100% or more. In some embodiments, the animal feed or feedstuff further comprises an amylase or protease. In some embodiments, the animal feed or feedstuff further comprises an amylase and protease. The recommended dose can be found, for example, in the National Research Council guidelines

In some embodiments, the invention is an animal feed or feedstuff comprising less than 500%, 400%, 300%, 200%, 100%, 90%, 80%, 70%, 60%, 50%, 40%, 30%, 20%, or 10% of the recommended supplemental dose of vitamin E, and an effective dose of amylase or protease. In some embodiments, the effective dose of amylase or protease is effective to increase liver vitamin E level by 5%, 10%, 15%, 20%, 25%, 30%, 35%, 40%, 45%, 50%, 55%, 60%, 65%, 70%, 75%, 80%, 85%, 90%, 95%, 100% or more. In some embodiments, the animal feed or feedstuff further comprises an amylase or protease. In some embodiments, the animal feed or feedstuff further comprises an amylase and protease.

In any of the above feed or feedstuff embodiments, the lower suggested supplemental dose of vitamin E is the lower dose as suggested by Blum et al.

The present invention is further described by the following examples which should not be construed as limiting the scope of the invention.

### EXAMPLES

### Example 1: Measurement of liver vitamin E content in broiler chickens

The study evaluated the efficacy of various enzymes on vitamin E utilization of broiler chicken fed nutrient reduced corn-soya based diets.

Day old male broiler chicks were divided into eight groups and fed one of the following diets: (PC is the positive control, formulated to meet commercial recommendations; NC is negative control; XAP is a combination of xylanase, amylase and protease):
1) PC
2) PC + XAP 50 mg/MT
3) PC + XAP 100 mg/MT
4) PC + xylanase B
5) NC
6) NC + XAP 50 mg/MT
7) NC + XAP 100 mg/MT
8) NC + xylanase B

Feed and water were supplied for *adlibitum* intake from d 1 to 21. Room temperature, ventilation and lighting were maintained as per Animal Science Research Unit standard operation procedures. Chicks were monitored daily for any signs of poor health or body condition. Any chick showing signs of poor health was culled. Feeders were checked daily to ensure that feed was accessible at times. Waterers were checked and cleaned daily to ensure chicks had a continuous supply of clean water. the brooder and room temperature was set at 32°C and 29°C, respectively, during the first 7 days. Thereafter, heat supply in the brooder was switched off and room temperature was maintained at 29°C throughout the experiment. Light was on throughout the experiment. On day 22, all birds in each treatment were sacrificed using carbon dioxide. Liver vitamin E levels were measured for content using standard AOAC methods and procedures. Results are shown in Table 1.

**Table 1. Vitamin-E content of selected nutrients**

| | Treatment | | | | | | | | | |
|---|---|---|---|---|---|---|---|---|---|---|
| | PC diet | | | | | NC diet | | | | |
| | | XAP | XAP | | | XAP | XAP | | | |
| Item | -ENZ | 50 | 100 | Xyl B | -ENZ | 50 | 100 | Xyl B | SEM² | P-value |
| Liver Vit E | 23.3^{b} | 27.7^{ab} | 37.2^{a} | 24.5^{b} | 24.9^{b} | 26.2^{b} | 28.9^{ab} | 27.7^{ab} | 2.53 | 0.006 |

As can be seen, an increase in liver vitamin E levels can be seen in xylanase alone, or in combination with amylase and protease.

## Claims

1. Composition comprising an amylase or protease for use in the treatment or prevention of vitamin E deficiency in an animal, wherein the composition improves animal fat soluble vitamin uptake from feed, wherein the fat soluble vitamin is vitamin E and further wherein the composition is administered to the animal.

2. Composition for use according to claim 1, wherein the animal fat soluble vitamin uptake is measured by levels of the fat soluble vitamin in the liver.

3. Composition for use according to claim 1 or claim 2, wherein the composition further comprises:
a. a xylanase enzyme; or
b. an amylase and a protease enzyme; or
c. a xylanase enzyme, an amylase enzyme and a protease enzyme.

4. Composition for use according to any of the previous claims, wherein the animal is a monogastric or ruminant animal.

5. Composition for use according to claim 4, wherein the monogastric animal is poultry, swine, fish, shell fish, human, or a pet, or wherein the ruminant animal is a bovine, sheep, goat, camel, deer, llama, antelope, alpaca or wildebeest.

6. Composition for use according to any of the previous claims, wherein the composition is in an animal feed or premix.

7. Composition for use according to any of the previous claims, wherein the enzymes are in a granule form.

8. Composition for use according to any one of claims 1 to 6, wherein the enzymes are in a liquid form.

9. Composition comprising xylanase for use in decreasing animal fertility disorders, wherein the composition is administered to the animal.

10. Composition comprising xylanase for use in improving animal immune function or improving animal gastrointestinal tract health, wherein the animal is a monogastric or ruminant animal, wherein the monogastric animal is poultry, swine, fish, shell fish, or a pet, or wherein the ruminant animal is a bovine, sheep, goat, camel, deer, llama, antelope, alpaca or wildebeest.

11. Composition for use according to claim 9 or claim 10, wherein the composition further comprises an amylase or protease.

12. Non-therapeutic use of a composition comprising xylanase for improving animal meat quality, wherein the composition is administered to the animal.

13. Non-therapeutic use of a composition according to claim 12, wherein the composition further comprises amylase or protease.

14. Non-therapeutic use of a composition comprising an amylase or protease in improving animal fat soluble vitamin uptake from feed, wherein the composition is administered to the animal.

15. The non-therapeutic use according to claim 14, wherein the fat soluble vitamin is vitamin E.

## Patentansprüche

1. Zusammensetzung, umfassend eine Amylase oder Protease zur Verwendung bei der Behandlung oder Prävention von Vitamin-E-Mangel bei einem Tier, wobei die Zusammensetzung die Aufnahme von fettlöslichem Vitamin aus dem Futter durch das Tier verbessert, wobei es sich bei dem fettlöslichen Vitamin um Vitamin E handelt und wobei die Zusammensetzung dem Tier verabreicht wird.

2. Zusammensetzung zur Verwendung gemäß Anspruch 1, wobei die Aufnahme des fettlöslichen Vitamins durch das Tier anhand des Gehalts des fettlöslichen Vitamins in der Leber gemessen wird.

3. Zusammensetzung zur Verwendung nach Anspruch 1 oder Anspruch 2, wobei die Zusammensetzung zudem umfasst:
a. ein Xylanase-Enzym; oder
b. ein Amylase- und ein Protease-Enzym; oder
c. ein Xylanase-Enzym, ein Amylase-Enzym und ein Protease-Enzym.

4. Zusammensetzung zur Verwendung nach einem der vorhergehenden Ansprüche, wobei das Tier ein Monogastrier oder Wiederkäuer ist.

5. Zusammensetzung zur Verwendung nach Anspruch 4, wobei es sich bei dem Monogastrier um Geflügel, Schwein, Fisch, Schalentier, Mensch oder ein Haustier handelt, oder wobei es sich bei dem Wiederkäuer um ein Rind, Schaf, eine Ziege, ein Kamel, ein Rotwild, ein Lama, eine Antilope, ein Alpaka oder ein Gnu handelt.

6. Zusammensetzung zur Verwendung nach einem der vorhergehenden Ansprüche, wobei die Zusammensetzung in einem Tierfutter oder einer Vormischung enthalten ist.

7. Zusammensetzung zur Verwendung nach einem der vorhergehenden Ansprüche, wobei die Enzyme in Granulatform vorliegen.

8. Zusammensetzung zur Verwendung nach einem der Ansprüche 1 bis 6, wobei die Enzyme in einer flüssigen Form vorliegen.

9. Zusammensetzung, umfassend Xylanase zur Verwendung bei der Verminderung von Fruchtbarkeitsstörungen bei Tieren, wobei die Zusammensetzung dem Tier verabreicht wird.

10. Zusammensetzung, umfassend Xylanase zur Verwendung bei der Verbesserung der Immunfunktion beim Tier oder der Verbesserung der Gesundheit des Magen-Darm-Trakts beim Tier, wobei das Tier ein Monogastrier oder ein Wiederkäuer ist, wobei es sich bei dem Monogastrier um Geflügel, Schwein, Fisch, Schalentier oder ein Haustier handelt, oder wobei es sich bei dem Wiederkäuer um ein Rind, ein Schaf, eine Ziege, ein Kamel, ein Rotwild, ein Lama, eine Antilope, ein Alpaka oder ein Gnu handelt.

11. Zusammensetzung zur Verwendung nach Anspruch 9 oder Anspruch 10, wobei die Zusammensetzung zudem eine Amylase oder Protease umfasst.

12. Nicht-therapeutische Verwendung einer Xylanase umfassenden Zusammensetzung zur Verbesserung der Fleischqualität von Tieren, wobei die Zusammensetzung dem Tier verabreicht wird.

13. Nicht-therapeutische Verwendung einer Zusammensetzung nach Anspruch 12, wobei die Zusammensetzung zudem Amylase oder Protease umfasst.

14. Nicht-therapeutische Verwendung einer Zusammensetzung, umfassend eine Amylase oder Protease zur Verbesserung der Aufnahme von fettlöslichen Vitaminen aus dem Futter durch das Tier, wobei die Zusammensetzung dem Tier verabreicht wird.

15. Nicht-therapeutische Verwendung nach Anspruch 14, wobei es sich bei dem fettlöslichen Vitamin um Vitamin E handelt.

## Revendications

1. Composition comprenant une amylase ou une protéase pour une utilisation dans le traitement ou la prévention d'une déficience en vitamine E chez un animal, la composition améliorant l'absorption de vitamine liposoluble chez l'animal à partir d'aliments pour animaux, où la vitamine liposoluble est la vitamine E et la composition étant en outre administrée à l'animal.

2. Composition pour une utilisation selon la revendication 1, dans laquelle l'absorption de vitamine liposoluble chez l'animal est mesurée par les taux de vitamine liposoluble dans le foie.

3. Composition pour une utilisation selon la revendication 1 ou selon la revendication 2, la composition comprenant en outre :
a. une enzyme de type xylanase ; ou
b. une amylase et une enzyme de type protéase ; ou
c. une enzyme de type xylanase, une enzyme de type amylase et une enzyme de type protéase.

4. Composition pour une utilisation selon l'une quelconque des revendications précédentes, l'animal étant un animal monogastrique ou ruminant.

5. Composition pour une utilisation selon la revendication 4, l'animal monogastrique étant une volaille, un porc, un poisson, un fruit de mer, un être humain ou un animal domestique, ou l'animal ruminant étant un bovin, un mouton, une chèvre, un camélidé, un cervidé, un lama, une antilope, un alpaga ou un gnou.

6. Composition pour une utilisation selon l'une quelconque des revendications précédentes, la composition étant un aliment ou un prémélange pour animaux.

7. Composition pour une utilisation selon l'une quelconque des revendications précédentes, dans laquelle les enzymes se trouvent sous forme de granulés.

8. Composition pour une utilisation selon l'une quelconque des revendications 1 à 6, dans laquelle les enzymes se trouvent sous forme liquide.

9. Composition comprenant de la xylanase, pour une utilisation dans la réduction des troubles de fertilité chez l'animal, la composition étant administrée à l'animal.

10. Composition comprenant de la xylanase, pour une utilisation dans l'amélioration de la fonction immunitaire chez l'animal ou l'amélioration de la santé du tractus gastro-intestinal chez l'animal, l'animal étant un animal monogastrique ou ruminant, l'animal monogastrique étant une volaille, un porc, un poisson, un fruit de mer, ou un animal domestique, ou l'animal ruminant étant un bovin, un mouton, une chèvre, un camélidé, un cervidé, un lama, une antilope, un alpaga ou un gnou.

11. Composition pour une utilisation selon la revendication 9 ou selon la revendication 10, la composition comprenant en outre une amylase ou une protéase.

12. Utilisation non thérapeutique d'une composition comprenant de la xylanase afin d'améliorer la qualité de la viande animale, la composition étant administrée à l'animal.

13. Utilisation non thérapeutique d'une composition selon la revendication 12, la composition comprenant en outre une amylase ou une protéase.

14. Utilisation non thérapeutique d'une composition comprenant une amylase ou une protéase afin d'améliorer l'absorption de vitamine liposoluble chez l'animal à partir d'aliments pour animaux, dans laquelle la composition est administrée à l'animal.

15. Utilisation non thérapeutique selon la revendication 14, dans laquelle la vitamine liposoluble est la vitamine E.
